# EUROPEAN PATENT SPECIFICATION

(11) **EP 1 218 252 B1**
(45) Date of publication and mention of the grant of the patent: **06.08.2003**
(21) Application number: 00967465.6
(22) Date of filing: 05.10.2000
(51) Int. Cl.: B65D 45/18, B01D 46/00

(54) **TORSIONAL SNAP FIT CONNECTOR FOR AIR FILTER COVER**
DREHSCHNAPPVERSCHLUSS FÜR LUFTFILTERDECKEL
RACCORD A ENCLIQUETER PAR TORSION POUR COUVERCLE DE FILTRE A AIR

(30) Priority: 07.10.1999 US 158182 P
(43) Date of publication of application: 03.07.2002
(73) Proprietor: Siemens VDO Automotive Inc., Chatham, Ontario N7M 5M7 (CA)
(72) Inventor: BLOOMER, Stephen, F., London, Ontario N6P 1E5 (CA)
(74) Representative: Humphrey-Evans, Edward John
(86) International application number: CA0001169
(87) International publication number: WO01025105

(56) References cited:
- US-A- 3 825 110
- US-A- 4 782 561
- US-A- 5 295 602
- US-A- 5 947 462

## Description

### BACKGROUND OF THE INVENTION

This invention relates to an improved cover, which may be utilized for an air filter to provide a resilient snap fit.

As is known, air filters are utilized to filter the air passing from a source of air to a vehicle engine. Typically, the air filter is captured between an upper cover and a lower cover. The two covers are secured together in some fashion. Typically, wing bolts having threaded nuts secured onto the bolts hold the two cover portions together.

However, as is known, the vehicle engine is subject to a good deal of vibration. Thus, the wing nut connection has not always provided a good connection over time. Moreover, it is relatively time consuming to remove the nut and then resecure the nut Housings manufactured from plastics are known. US-A-5,295,602 (Swanson) provides a plastic housing with a snap-latch closure wherein a barb of a first closure element snaps into engagement with a crossbar associated with a second closure element.

### SUMMARY OF THE INVENTION

In accordance with a first aspect of the invention, there is provided a cover for an entrapped element comprising: a bottom portion and a top portion with an element entrapped between said top and bottom portions; and a securement structure for securing said top and bottom portions together, said secorement structure including a wing member pivotally attached to one of said top and bottom portions, and a slot formed on the other of said top and bottom portions, wherein the wing member is pivotally attached about a pivot axis, said pivot axis being generally perpendicular to a closure plane defined by the top and bottom portion and wherein at least one of said wing member and said slot having a wedged surface operable to cam with a surface on said other wing member or slot, such that when said wing member is moved through said slot said wedged surface is operable to cam said wing member about a pivot axis in a first direction, and said wing member being operable to snap back in a direction opposite to said first direction once said wing portion has passed through said slot to overlay a surface adjacent said slot and secure said top and bottom cover portions together.

In a disclosed embodiment of this invention, an air cleaner upper cover is secured to a lower cover by a snap fit connection. More preferably, the snap fit connection includes at least one wing member having a wedged surface, which extends through a wedged surface slot in the other cover member. The two cover members are aligned with the slot in the one cover member aligned with the wedged wing surface. As the wing surface moves through the slot, the two wedges on the slot and the wing cam the wing away from the slot wedge surface. Once the wing member has moved through the slot, the wing twists back over the surface adjacent the slot.

Most preferably, the wing member is provided on a post, and the post extends though the slot after the wing has moved entirely through the slot. This post receives a torsion force as the wing is being cammed through the slot. This torsion force returns the wing to a relaxed position once it has passed through the slot. In a most preferred embodiment of this invention, the wing has wedge surfaces spaced on opposed sides of the post, as does the slot. In this way, surfaces on both sides of the post are applying a torsion force to the post as the wing moves through the slot.

The present invention thus provides a resilient snap fit connection for holding two cover portions together. Most preferably, the two cover portions secure a filter element for a vehicle engine.

To remove the cover portions the wing is simply turned in an opposed direction, similar to that achieved by the wedge surface in the slot. The two cover portions may then be moved away from each other with the wing portion moving through the slot.

These and other features of the present invention can be best understood from the following specification and drawings. The following of which is a brief description.

### BRIEF DESCRIPTION OF THE DRAWINGS

Figure 1 is a perspective view showing the main components of the inventive cover mechanism.
Figure 2 is an assembled cross-sectional view.
Figure 3 is a top view showing portions of the snap fit connection.

### DETAILED DESCRIPTION OF A PREFERRED EMBODIMENT

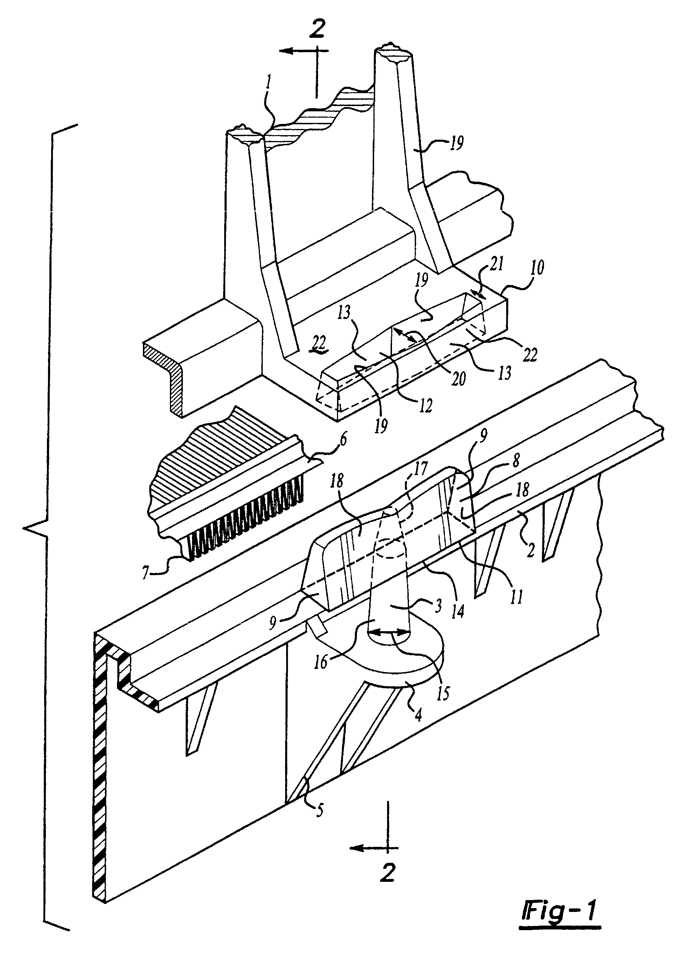

As shown in Figure 1, a filter assembly 20 has a top cover portion 1 secured to a bottom cover portion 2. A post 3 is formed off of a flange 4 attached by gussets 5 to the body of the lower cover 2. A filter seal 6 and a filter element 7 are positioned on the lower cover 2. The upper cover 1 is removable from the lower cover portion, and may pivot, or may be movable in any other known direction.

A wing 8 is secured to the post 3, and has a pair of wing portions 9. A slot flange 10 in the upper cover 1 has a slot 12 to receive a wedged surface 11 from the wing portions 9. Wedged portions 11 move through slot 12, which has mating wedged portions 13. A bottom end 14 of the wing 8, will sit atop overlap surfaces 22 once the wing has moved through the slot. An axis 15 of the post 3 receives torsion as the wing is pivoted by the wedged surfaces. Flat surfaces 18 on the wing 8 are formed on an opposed face of the wing portions 9 from the wedged surfaces 11. Similarly, flat surfaces 19 are formed in the slot 12 on opposed surfaces from the wedges 13.

As can be seen, a dimension 21 of the slot 12 is sufficient to receive the width of the wing portions at their lower most extent.

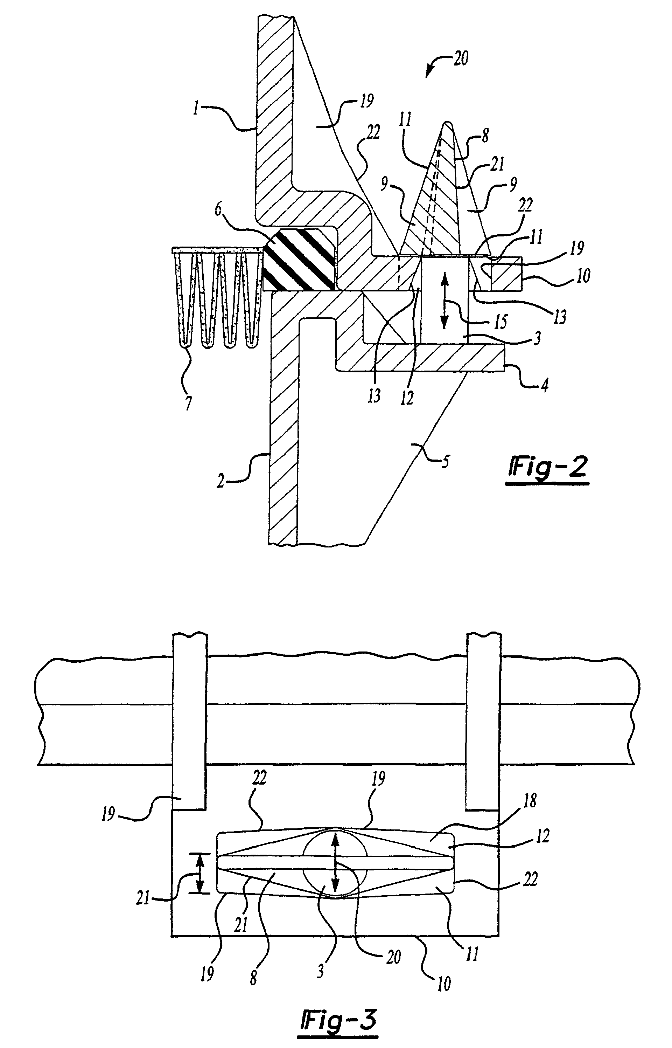

As shown in Figure 2, when the upper portion 1 is mounted onto the lower portion 2, the wing 8 has moved through the slot 12. Wedged surfaces 13 have cammed the wedge surface 11 from the wing portions 9. This causes the wing portions 9 to pivot relative to the central axis 15. This causes a torsion force in the post 3. Once the wing 9 has moved through the slot 12, the wing portions 9 pivot back due to the torsion built up in the post 3. The wedged portions 11 of the wing portions 9 thus overlap the overlap areas 22 on the slot flange 10 of the upper part 1. As shown in this figure, it can be appreciated that to remove the wing portion 8, the wing portions are merely pivoted in the same direction as cammed by the wedged surfaces, at which time the upper cover 1 can be removed from the lower cover 2.

Figure 3 is a top view showing the overlap areas 22 covered by the wedged surfaces 11 of the wing portions 9. As can be seen, there is clearance forward of the flat portions 19 such that should one pivot the wing portions 9 counterclockwise as shown in Figure 3, the slot 12 may then be moved off of the winged portions.

The present invention provides a simple and secure way for securing two cover portions of an air filter system together. Although a preferred embodiment of this invention has been disclosed, a worker in this art would recognize that many modifications would come within the scope of this invention. For that reason the following claims should be studied to determine the true scope and content of this invention.

## Claims

1. A cover for an entrapped element eomprising:
a bottom portion (2) and a top portion (1) with an element (7) entrapped between said top and bottom portions; and
a securcment structure for securing said top and bottom portions together, said securement structure including a wing member (8) pivotally attached to one of said top and bottom portions, and a slot (12) formed on the other of said top and bottom portions, wherein the wing member is pivotally attached about a pivot axis (15), said pivot axis being generally perpendicular to a closure plane defined by the top and bottom portion and wherein at least one of said wing member and said slot having a wedged surface operable to cam with a surface (13, 18) on said other wing member or slot, such that when said wing member (18, 13) is moved through said slot said wedged surface is operable to cam said wing member about the pivot axis in a first direction, and said wing member being operable to snap back in a direction opposite to said first direction once said wing member has passed through said slot to overlay a surface adjacent said slot and secure said top and bottom cover portions together.

2. A cover as set forth in Claim 1, wherein an air filter element is the element captured between said top and bottom cover portions.

3. A cover as set forth in Claim 1, wherein said wing member is connected to said one cover portion by a post (3), and said wing member moving through said slot with said post being received in said slot after said wing member has passed through said slot.

4. A cover as set forth in Claim 3, wherein there are a pair of said wing members (9) spaced on each side of said post.

5. A cover as set forth in Claim 3, wherein said post is attached to said one cover portion by a gusset structure (4) extending from an outer surface of said cover portion.

6. A cover surface as set forth in Claim 1, wherein said wing member is associated with a lower cover member.

7. A cover as set forth in Claim 1, wherein said slot is formed with a flat surface (14) on a side opposed to said wedged surface, and said wing member is provided with a flat surface on the side opposed to said wedged surface.

## Patentansprüche

1. Abdeckung für ein eingeschlossenes Element, welche umfasst:
ein Unterteil (2) und ein Oberteil (1) mit einem zwischen dem besagten Oberteil und dem besagten Unterteil eingeschlossenen Element (7); und
eine Befestigungskonstruktion zum Befestigen des besagten Oberteils und des besagten Unterteils aneinander, wobei die besagte Befestigungskonstruktion ein Flügelelement (8), welches drehbar an einem der besagten Teile, dem Oberteil oder dem Unterteil, angebracht ist, und ein Langloch (12), das in dem anderen der besagten Teile vorgesehen ist, umfasst, wobei das Flügelelement um eine Drehachse (15) drehbar angebracht ist, wobei die besagte Drehachse im Allgemeinen senkrecht zu einer durch das Ober- und das Unterteil definierten Verschlussebene ist und wobei wenigstens eines der beiden Elemente, das besagte Flügelelement oder das besagte Langloch, eine keilförmige Fläche aufweist, die so beschaffen ist, dass sie mit einer Fläche (13, 18) an dem anderen der beiden besagten Elemente, dem Flügelelement oder dem Langloch, zum Eingriff kommt, so dass, wenn das besagte Flügelelement (18, 13) durch das besagte Langloch hindurchbewegt wird, die besagte keilförmige Fläche bewirkt, dass das besagte Flügelelement um die Drehachse in eine erste Richtung gedreht wird, und wobei das besagte Flügelelement so beschaffen ist, dass es in eine zu der besagten ersten Richtung entgegengesetzte Richtung zurückschnappt, nachdem sich das besagte Flügelelement durch das besagte Langloch hindurchbewegt hat, so dass es auf einer an das besagte Langloch angrenzenden Fläche aufliegt und das besagte Oberteil und das besagte Unterteil der Abdeckung aneinander befestigt.

2. Abdeckung nach Anspruch 1, wobei das zwischen dem besagten oberen und dem besagten unteren Abdeckungsteil eingeschlossene Element ein Luftfilterelement ist.

3. Abdeckung nach Anspruch 1, wobei das besagte Flügelelement mit dem besagten einen Abdeckungsteil mittels einer Stütze (3) verbunden ist und wobei, wenn sich das besagte Flügelelement durch das besagte Langloch hindurchbewegt, die besagte Stütze in dem besagten Langloch aufgenommen wird, nachdem sich das besagte Flügelelement durch das besagte Langloch hindurchbewegt hat.

4. Abdeckung nach Anspruch 3, wobei zwei von den besagten Flügelelementen (9) vorhanden sind, welche in einem Abstand voneinander auf jeweils einer Seite der besagten Stütze angeordnet sind.

5. Abdeckung nach Anspruch 3, wobei die besagte Stütze an dem besagten einen Abdeckungsteil mittels einer Versteifungskonstruktion (4) angebracht ist, welche sich ausgehend von einer Außenfläche des besagten Abdeckungsteils erstreckt.

6. Abdeckungsfläche nach Anspruch 1, wobei das besagte Flügelelement zu einem unteren Abdeckungselement gehört.

7. Abdeckung nach Anspruch 1, wobei das besagte Langloch mit einer ebenen Fläche (14) auf einer der besagten keilförmigen Fläche gegenüberliegenden Seite versehen ist und das besagte Flügelelement mit einer ebenen Fläche auf der der besagten keilförmigen Fläche gegenüberliegenden Seite ausgestattet ist.

## Revendications

1. Enveloppe de protection pour un élément emprisonné comprenant :
une partie inférieure (2) et une partie supérieure (1), un élément (7) étant emprisonné entre lesdites parties supérieure et inférieure, et
une structure de fixation destinée à fixer ensemble lesdites parties supérieure et inférieure, ladite structure de fixation comprenant un élément de languette (8) fixé avec possibilité de pivotement à l'une desdites parties supérieure et inférieure, et une fente (12) formée sur l'autre desdites parties supérieure et inférieure, où l'élément de languette est fixé de façon pivotante autour d'un axe de pivotement (15), l'axe de pivotement étant sensiblement perpendiculaire à un plan de fermeture défini par les parties supérieure et inférieure, et où au moins l'un dudit élément de languette et de ladite fente présente une surface en coin agissant pour effectuer un mouvement de came avec une surface (13, 18) sur ledit autre élément de languette ou fente, de sorte que lorsque ledit élément de languette (18, 13) est déplacé au travers de ladite fente, ladite surface en coin peut agir pour pousser ledit élément de languette autour de l'axe de pivotement dans une première direction, et ledit élément de languette pouvant agir pour revenir par encliquetage dans une direction opposée à ladite première direction une fois que ledit élément de languette a traversé ladite fente pour recouvrir une surface adjacente à ladite fente et fixer ensemble lesdites parties d'enveloppe de protection supérieure et inférieure.

2. Enveloppe de protection selon la revendication 1, dans laquelle un élément de filtre à air constitue l'élément emprisonné entre lesdites parties de l'enveloppe de protection supérieure et inférieure.

3. Enveloppe de protection selon la revendication 1, dans laquelle ledit élément de languette est raccordé à ladite une partie d'enveloppe de protection par une colonnette (3), et ledit élément de languette se déplaçant au travers de ladite fente, ladite colonnette étant reçue dans ladite fente après que ledit élément de languette a traversé ladite fente.

4. Enveloppe de protection selon la revendication 3, dans laquelle il existe une paire desdits éléments de languette (9) espacés de chaque côté de ladite colonnette.

5. Enveloppe de protection selon la revendication 3, dans laquelle ladite colonnette est fixée à ladite une partie d'enveloppe de protection par une structure de plaques de soutien (4) s'étendant depuis une surface extérieure de ladite partie d'enveloppe de protection.

6. Surface d'enveloppe de protection selon la revendication 1, dans laquelle ledit élément de languette est associé à un élément d'enveloppe de protection inférieur.

7. Enveloppe de protection selon la revendication 1, dans laquelle ladite fente est munie d'une surface plate (14) d'un côté opposé à ladite surface en coin, et ledit élément de languette est muni d'une surface plate du côté opposé à ladite surface en coin.
